# EUROPÄISCHE PATENTSCHRIFT

(11) **EP 2 988 923 B1**
(45) Veröffentlichungstag und Bekanntmachung des Hinweises auf die Patenterteilung: **14.06.2017**
(21) Anmeldenummer: 14719275.1
(22) Anmeldetag: 17.04.2014
(51) Int. Cl.: B29C 70/46, B29C 37/00, B29C 57/00, E21B 17/00, F16L 9/128, B29L 23/00, F16L 19/06, F16L 47/24, B29C 35/08, B29C 53/58

(54) **VERFAHREN ZUR HERSTELLUNG EINES COMPOSITE-ROHRES**
PROCESS FOR PRODUCING A COMPOSITE TUBE
PROCÉDÉ DE FABRICATION D'UN TUYAU COMPOSITE

(30) Priorität: 22.04.2013 DE 102013207203; 23.04.2013 US 201361815009 P
(43) Veröffentlichungstag der Anmeldung: 02.03.2016
(73) Patentinhaber: Voith Patent GmbH, 89522 Heidenheim (DE)
(72) Erfinder: BRÜHLER, Jürgen, 83301 Traunreut (DE); SEIP, Benjamin, 82299 Türkenfeld (DE); TICHELMANN, Patrick, 51643 Gummersbach (DE)
(86) Internationale Anmeldenummer: PCT/EP2014/057863
(87) Internationale Veröffentlichungsnummer: WO 2014/173796

(56) Entgegenhaltungen:
- EP-A1- 0 928 619
- DE-A1- 2 636 068

## Beschreibung

Die Erfindung betrifft Verfahren zur Herstellung eines Rohres aus faserverstärktem Kunststoff, bei dem das Rohr durch Wickeln eines Faserverstärkungsmaterials auf einen Wickelkern und Aufbringen eines Matrixmaterials gebildet wird, und ein so hergestelltes Rohr.

Solche Verfahren sind beispielsweise zur Herstellung von Walzen aus Composite-Material bekannt. Der Wickelkern definiert dabei die innere Oberfläche des Rohres und erzeugt eine entsprechende Oberflächengenauigkeit und Oberflächenqualität. Die Außenseite des Rohres bleibt nach dem Wickeln und Aushärten im Ofen unregelmäßig wellig. Um auf der Außenseite des Rohres eine definierte ebene Oberfläche zu erzeugen, ist bisher eine mechanische Nachbearbeitung notwendig. Entweder wird durch Abdrehen oder durch Schleifen eine entsprechende Oberfläche hergestellt. Das ist nachteilig, da weitere aufwändige Arbeitsschritte nötig sind. Außerdem kann nur Matrixmaterial abgetragen werden, da die Faserverstärkung nicht verletzt werden darf. Das stellt eine Einschränkung bei der Gestaltung dar.

Aus DE 2342593 A ist weiterhin ein Verfahren zur Herstellung konischer Rohre aus glasfaserverstärktem Polyesterharz bekannt, bei dem auf eine nachträgliche Bearbeitung der Oberfläche verzichtet werden kann. Nach dem Wickeln des Rohres auf einem Wickelkern und vor dem Aushärten wird ein Pressmantel über der gesamten Länge des Rohres von außen aufgebracht oder axial aufgeschoben, so dass das Rohrmaterial verpresst wird. Anschließend wird es ausgehärtet. Nachteilig an diesem bekannte Verfahren ist, dass keine besonders genauen Oberflächen gefertigt werden können. Das ist für solche Rohre, die beispielsweise als Masten verwendet werden allerdings auch nicht nötig.

Aus der DE 26 36 068 ist ein Verfahren zur Herstellung eines Rohres aus faserverstärktem Kunststoff mit einer Passungsfläche bekannt.

Die Aufgabe der Erfindung ist es nun, ein Verfahren zur Herstellung gewickelter, Rohre aus faserverstärktem Kunststoff so weiterzuentwickeln, dass genau definierte Oberflächen auf der Außenseite ohne nachträgliche mechanische Nachbearbeitung erzeugt werden können.

Die Aufgabe wird für das Verfahren erfindungsgemäß dadurch gelöst, dass folgenden Schritte beim Verfahren zur Herstellung eines Rohres aus faserverstärktem Kunststoff mit einer Passungsfläche ausgeführt werden:
a) Wickeln eines Faserverstärkungsmaterials auf einen Wickelkern und Aufbringen eines Matrixmaterials zur Bildung des Rohres,
b) Zentrieren eines Passungsformwerkzeuges in Bezug auf den Wickelkern,
c) Aufschieben des Passungsformwerkzeuges in axialer Richtung auf die spätere Passungsfläche, welche auf einem ringförmigen Teil der Außenumfangsfläche des Rohres gebildet wird, wobei das Passungsformwerkzeug zumindest zeitweise während des Aufschiebens relativ zum Rohr und zum Wickelkern rotiert,
d) Thermische Behandlung des Rohres in einem Ofen zum Aushärten des Matrixmaterials, wobei das Passungsformwerkzeug während der thermischen Behandlung in Kontakt mit dem ringförmigen Teil der Außenumfangsfläche bleibt und dadurch eine definierte ringförmige Oberfläche (Passungsfläche) auf der Rohraußenseite durch das Passungswerkzeug erzeugt wird.

Ein Vorteil dieses Verfahrens ist, dass die definierte Oberfläche noch vor dem Aushärten in das noch gestaltungsfähige Matrixmaterial durch das Passungsformwerkzeug aufgeprägt wird und in dieser Form im Ofen aushärtet. Durch das Aufschieben des Formwerkzeuges und die dabei zumindest zeitweise vorhandene relative Rotationsbewegung zwischen Passungsformwerkzeug und Rohr wird eine sehr gleichmäßige und störungsfreie Verdrängung oder Verdichtung von überschüssigem Matrixmaterial erreicht. Dadurch sind sehr exakte Flächen, z.B. mit sehr glatter, ebener Oberfläche oder mit genauem Durchmesser oder mit genau definierter Form möglich. Dadurch dass das Passungsformwerkzeug in Bezug auf den Wickelkern zentriert wird, ist auch eine exakt koaxiale Ausformung der Passfläche gegeben. Die Zentrierung ist so ausgeführt, dass sie während des Aufschiebens weiterwirkt. Bevorzugt erfolgt die

Zentrierung als mechanische Zentrierung, beispielsweise über einen Zentrierstift, der in eine Zentrierbohrung eingreift.

Solch genaue Passungsflächen sind notwendig als Basis für gute Klemm- oder Klebeverbindungen mit z.B. metallischen Anschlussteilen. Mit dem erfindungsgemäßen Verfahren lassen sich Rohre mit innen und außen passgenauer Oberfläche in vereinfachter Weise herstellen. Die Innenseite wird durch den Wickelkern vorgegeben und der ringförmige Bereich auf der Außenfläche durch das Passformwerkzeug. Da dies ohne mechanische Nachbearbeitung möglich ist, können die Rohre schneller und günstiger hergestellt werden. Die relative Rotationsbewegung kann entweder durch Rotation des Passungsformwerkzeuges oder durch Rotation des Rohres, z.B. über Rotation des Wickelkernes, realisiert werden. Es können auch beide Teile mit unterschiedlicher Geschwindigkeit oder Drehrichtung rotieren. Auch das Aufschieben kann entweder durch aktive Bewegung des Passformwerkzeuges und/oder durch aktive Bewegung des Rohres erfolgen.

Das erfindungsgemäße Verfahren ist besonders geeignet um Rohre mit einer Passungsfläche herzustellen, die einen Außendurchmesser im Bereich der Passungsfläche zwischen 30 und 500 mm, bevorzugt zwischen 80 und 300 mm aufweisen, wobei dieser Durchmesser im Bereich der ringförmigen Passungsfläche eine Abweichung vom Sollwert von kleiner +/- 0,5 mm, bevorzugt von kleiner +/- 0,1 mm aufweist. Ebenso ist es besonders geeignet, um Rohre mit einer konisch geformten Passungsfläche herzustellen, wobei deren Konuswinkel zwischen 0,1 und 5°, bevorzugt zwischen 0,1 und 1° beträgt und die Abweichung vom Sollwert des Konuswinkels kleiner als +/- 0,2°, bevorzugt kleiner als +/-0,05° ist.

Für die Herstellung des Rohres wird bevorzugt eine Faserverstärkung aus Glasfasern oder Aramidfasern oder besonders bevorzugt aus Kohlefasern verwendet. Es können auch verschiedene Fasern verwendet werden. Die Faserverstärkung kann unter verschiedenen Winkel und in mehreren Lagen aufgebracht werden. Dabei werden die Fasern als Wickelung von einem oder mehreren parallelen Rovings oder von Gewebe- oder Gelegebändern jeweils ein- oder mehrlagig und auch in Kombination aufgebracht. Die Faserverstärkung ist von einer Kunststoffmatrix umgeben. Als Matrixmaterial sind Thermoplaste oder bevorzugt Duromere, wie Epoxidharz besonders geeignet. Das Matrixmaterial kann bereits auf der Faserverstärkung vor dem Wickeln vorhanden sein oder es wird beim oder nach dem Wickeln aufgetragen. Die Aushärtung bzw. Konsolidierung des Matrixmaterials erfolgt durch eine thermische Behandlung im Ofen. Bevorzugt bei einer Temperatur zwischen 50°C und 250°C.

Weitere vorteilhafte Merkmale des erfindungsgemäßen Verfahrens, die die Qualität und die Gestaltungsmöglichkeiten der Oberfläche weiter verbessern oder das Verfahren vereinfachen, finden sich in den Unteransprüchen.

Bevorzugt werden die Schritte a)-d) in der genannten Reihenfolge ausgeführt. Es können aber auch einzelne Schritte in anderer Reihenfolge oder teilweise parallel erfolgen. So kann zum Beispiel Schritt b) vor a) erfolgen oder parallel zu Schritt c). Es könnte auch die Aufbringung des Matrixmaterials teilweise oder vollständig erst während Schritt c) erfolgen.

In jedem Fall ist das Passungsformwerkzeug so ausgeführt, dass es das Rohr in einem ringförmigen Bereich ganz umschließt. Es sind auch Anwendungen des erfinderischen Verfahrens möglich, bei dem das Passungsformwerkzeug dennoch nur auf einem Teil des Umfanges anliegt und nur auf diesem Teil definierte Passungsflächen erzeugt werden sollen. So ergibt sich eine unterbrochene ringförmige Passungsfläche. Bevorzugt liegt das Passungsformwerkzeug auf einem Großteil des Umfanges an der Oberfläche des Rohres an, so dass auf einem Großteil des Umfanges die Passungsfläche definiert erzeugt wird. Als Großteil ist mehr als die Hälfte, bevorzugt mehr als 70% des Umfanges anzusehen. Insbesondere kann das Passungsformwerkzeug mit dem Rohr auf dem gesamten Umfang in Kontakt sein, um eine durchgehende ringförmige Passungsfläche zu erzeugen.

Bei kegelförmigen, konischen bzw. gewölbten Flächen kann das Passungsformwerkzeug beispielsweise einteilig sein; so ist eine einfache nahtfreie Oberfläche möglich. Um das Passungsformwerkzeug einfacher auflegen und entfernen zu können auch bei konischen oder gewölbten Flächen oder um zylindrische oder nur leicht konisch geformte Passungsflächen erzeugen zu können, kann es zweiteilig oder mehrteilig ausgeführt sein. Die einzelnen Teile des Passungsformwerkzeuges werden vor dem Aufschieben zusammenfügt. Dadurch wird ein Verquetschen des Matrixmaterials und eine ungenaue Oberflächenbildung vermieden. Durch die relative Rotation beim Aufschieben ist auch hier eine nahtfreie Ausbildung der Oberfläche gegeben.

Damit auch im Bereich des Passungsformwerkzeuges eine kontrollierte Erwärmung und damit eine gute Aushärtung gewährleistet ist, ist es von Vorteil, dass das Passungsformwerkzeug beheizt wird, bevor oder nachdem es mit dem Rohr in Kontakt gebracht ist. Die Beheizung kann beispielsweise über in Bohrungen am Passungsformwerkzeug gesteckte elektrische Heizpatronen erfolgen. Ein kaltes Passungsformwerkzeug würde mehr Verweilzeit im Ofen erfordern. Das Passungsformwerkzeug kann auch vor dem Aufsetzen erwärmt und erst dann mit dem Rohr in Kontakt gebracht werden. Die Erwärmung kann beispielsweise in einem Ofen oder mit einer anderen Wärmequelle, wie zum Beispiel mit IR-Strahlern erfolgen.
Um die Temperatur des Passungsformwerkzeuges bei der Herstellung der Passungsfläche überwachen zu können, kann ein Temperatursensor und/oder zur Beheizung des Passungsformwerkzeuges eine Temperaturregelung verwendet werden. So wird sichergestellt, dass das Matrixmaterial innerhalb eines gewünschten Temperaturfensters erwärmt wird. Zu geringe Temperatur führt zu ungenügender Aushärtung und zu hohe Temperatur kann das Matrixmaterial schädigen und seine Eigenschaften in ungewünschter Weise verändern.

Das Passungsformwerkzeug kann so gestaltet sein, dass es eine zylindrische Oberfläche mit konstantem Durchmesser auf dem Rohr erzeugt. So kann in vorteilhafter Weise ein Passungssitz für ein weiteres Bauteil, das später auf dem Rohr montiert wird, direkt gefertigt werden. Besonders gut geeignet ist das Verfahren, um konische Passungsflächen am Rohrende herzustellen. Dazu ist das Passungsformwerkzeug so geformt, dass es eine konische Oberfläche auf dem Rohr (11) erzeugt. Bevorzugt nimmt der Durchmesser der konischen Fläche zum Rohrende hin ab. Insbesondere um eine gute Klemmverbindung zwischen dem Rohr und später montierten Metallverbindern herstellen zu können, wie sie beispielsweise bei Bohrgestängen für die Erdölbohrung verwendet werden, sind konische Passungsflächen geeignet. Mit dem Verfahren können auch im Querschnitt nicht gerade Passungsflächen erzeugt werden, z.B. eine gewölbte Oberfläche mit definiertem Wölbungsradius auf dem Rohr oder eine definiert gewellte Oberfläche auf dem Rohr. Die Welle kann eine regelmäßige Wellenform aufweisen. Der Vorteil solcher Flächen ist, dass in der Verbindung des Rohres mit anderen Bauteilen eine gewisse Axialkraft aufgenommen werden kann. Es können auch Passformwerkzeuge verwendet werden, die eine Kombination aus den vorher genannten Passungsflächen erzeugen, die also z.B. einen zylindrischen und einen konischen Teil haben.

Um Rohre mit hoher Festigkeit herstellen zu können, werden als Faserverstärkungsmaterial bevorzugt Kohlefasern verwendet, die bevorzugt in Form von Rovings auf den Wickelkern aufgewickelt werden. Besonders bei sehr hohen Festigkeitsanforderungen ist es von Vorteil wenn keine mechanische Oberflächenbearbeitung notwendig ist, da hier die Fasern auf keinen Fall freigelegt oder beschädigt werden dürfen. Besonders vorteilhaft lässt sich das Verfahren anwenden, wenn das Matrixmaterial ein Duromer, insbesondere ein Epoxidharz ist. Zur Aushärtung sind hierfür Temperaturen zwischen 50°C und 250°C notwendig. Duromere ergeben eine harte Oberfläche, so dass sich hier die eingesparte mechanische Bearbeitung besonders positiv bemerkbar macht.

Wird das Passungsformwerkzeug an die Außenumfangsfläche angepresst, so kann auch noch eine Verdichtung in diesem ringförmigen Teil des Rohres erzielt werden, was die Festigkeit und Belastbarkeit weiter erhöht. Bevorzugt wird es mit einem Druck angepresst, der größer als 0 bar ist und bis zu 1 bar beträgt.

Für das erfindungsgemäße Rohr wird die Aufgabe dadurch gelöst, dass dieses mit dem erfindungsgemäßen Verfahren hergestellt wird.

Besonders bevorzugt wird das Rohr so ausgeführt, dass es einen Außendurchmesser im Bereich der Passungsfläche zwischen 30 und 500 mm, bevorzugt zwischen 80 und 300 mm aufweist, wobei dieser Durchmesser im Bereich der ringförmigen Passungsfläche eine Abweichung vom Sollwert von kleiner +/- 0,5 mm, bevorzugt von kleiner +/- 0,1 mm aufweist. Ebenso ist es besonders bevorzugt, dass das Rohr eine konisch geformte Passungsfläche aufweist, deren Konuswinkel zwischen 0,1° und 5°, bevorzugt zwischen 0,1 und 1° beträgt und bei der die Abweichung vom Sollwert des Konuswinkels kleiner als +/- 0,2°, bevorzugt kleiner als +/-0,05° ist.

Anhand von Ausführungsbeispielen werden weitere vorteilhafte Merkmale der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden.
- **Fig.1**: Rohr mit zylindrischem Werkzeug für erfindungsgemäßes Verfahren
- **Fig.2**: Rohr mit konischem Werkzeug für erfindungsgemäßes Verfahren
- **Fig.3**: Rohrelement für Bohrgestänge mit einem CFK-Rohr hergestellt nach dem erfindungsgemäßem Verfahren

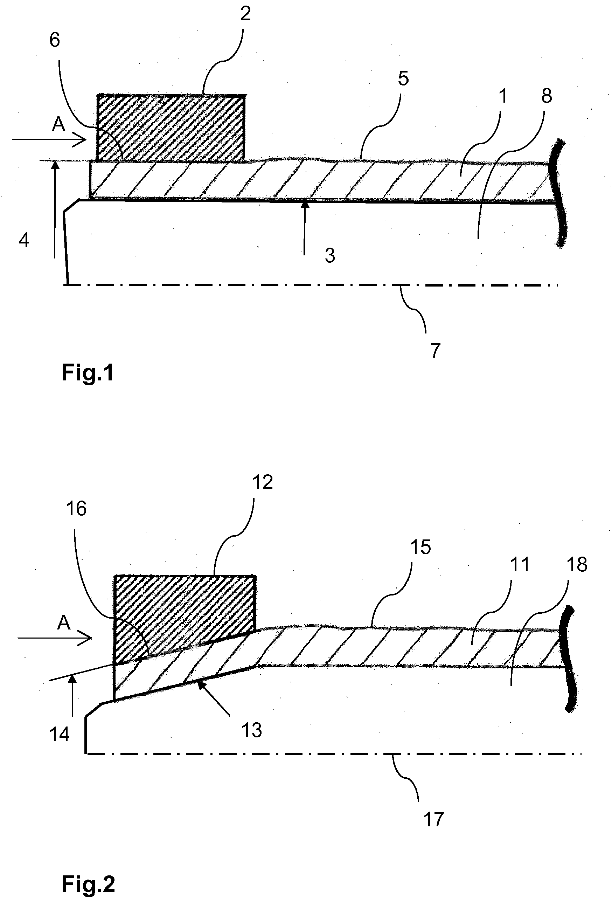

Nachfolgend werden die Figuren detaillierter beschrieben. **Fig.1** zeigt einen Ausschnitt als Beispiel für die Herstellung eines Rohres mit zylindrischer Passungsfläche. Das Rohr 1 ist bevorzugt aus CFK (Kohlefaserverstärktem Kunststoff). Die Achslinie 7 deutet an, dass nur die obere Hälfte im Schnitt dargestellt ist. Auf dem Wickelkern 8 wurde das Rohr gewickelt, indem Fasermaterial, beispielsweise Rovings oder Gewebe- oder Gelegebänder in einer oder mehreren Lagen aufgewickelt, und Matrixmaterial, beispielsweise duromeres Harz aufgebracht wurde. Der Wickelkern 8 definiert die Innenfläche und gibt den Innendurchmesser 3 vor. Gegebenenfalls kann die Innenfläche auch konisch ausgebildet sein.

Das Passungsformwerkzeug 2 ist nach dem Wickeln auf das noch gestaltungsfähige Matrixmaterial des Rohres 1 unter zumindest zeitweise relativer Rotation zum Rohr in axialer Richtung A aufgeschoben worden. Das Passungsformwerkzeug kann bevorzugt beheizt sein und mit einem Temperatursensor und/oder einer Temperaturregelung verbunden sein. Im Bereich der Kontaktfläche zwischen Passungsformwerkzeug 2 und Rohr 1 wird eine ringförmige zylindrische Passungsfläche 6 erzeugt. Dadurch dass das Passungsformwerkzeug vor dem Aushärten aufgelegt wird und beim Aushärten im Ofen auf dem Rohr verbleibt, bildet sich die Passungsfläche genau in der gewünschten Form aus. Durch das Aufschieben unter zumindest zeitweiser Rotation wird eine exakte und störungsfreie Ausbildung der gewünschten Passungsfläche ermöglicht. Vor dem Aufschieben wurde das Passungsformwerkzeug 2 in Bezug auf den Wickelkern 8 zentriert, zum Beispiel durch einen Zentrierstift, der in eine Zentrierbohrung eingreift. Wobei die nicht dargestellte Zentrierung so ausgeführt ist, dass das Passungsformwerkzeug während der Aufschiebebewegung zentriert bleibt. Die restliche Außenfläche 5 des Rohres bleibt in diesem Beispiel ungenau, so wie es sich nach dem Wickeln des Rohres ergibt. Nach dem Formen der Passungsfläche wird das Rohr 1 im Kontakt mit dem Passungsformwerkzeug 2 in einem Ofen ausgehärtet.

**Fig.2** zeigt ein analoges Beispiel für die Herstellung einer konischen Passungsfläche. Wiederum ist die Achse 17 angedeutet. Das Rohr 11 ist auf einem zum Rohrende hin zulaufenden Wickelkern 18 gewickelt, der die Innenfläche 13 definiert vorgibt. Das Passungsformwerkzeug 12, welches wiederum unter zumindest zeitweiser Rotation in axialer Richtung A aufgeschoben wurde, erzeugt auf der Außenseite des Rohres ebenfalls einen zum Ende hin zulaufenden Konus 16 mit genau definierter Kegelfläche 14. Auch hierbei wurde das Passungsformwerkzeug 2 vor dem Aufschieben in Bezug auf den Wickelkern 8 zentriert, zum Beispiel durch einen Zentrierstift, der in eine Zentrierbohrung eingreift. Die nicht dargestellte Zentrierung ist so ausgeführt, dass das Passungsformwerkzeug 12 während der Aufschiebebewegung zentriert bleibt.
Die gewickelte Oberfläche neben dem Werkzeug 12 bleibt hier zunächst roh. Nach dem Formen der Passungsfläche wird das Rohr 11 im Kontakt mit dem Passungsformwerkzeug 12 in einem Ofen ausgehärtet.

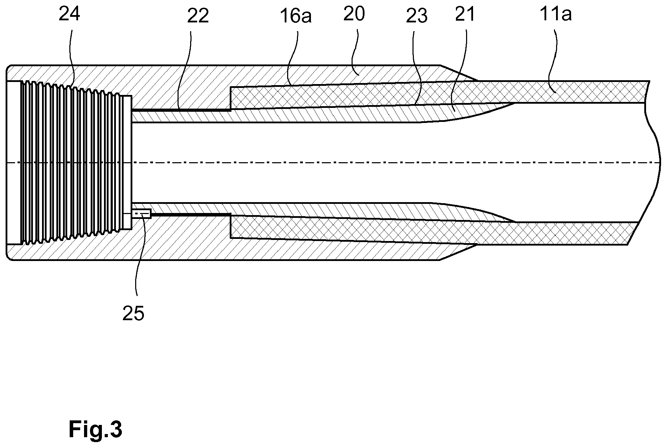

In **Fig.3** ist ein Beispiel für eine Anwendung dargestellt. Es ist ein Rohrelement wie sie zum Zusammenstellen eines Bohrgestänges für die Erdölbohrung verwendet werden können. Hierbei muss ein Metallverbinder 20, der ein konisches Gewinde 24 zum Verschrauben mit weiteren Rohrelementen zu einem Strang aufweist, mit dem CFK-Rohr 11a verbunden werden. Die Verbindung muss hohe Drehmomente und Axialkräfte übertragen können. Um das zu ermöglichen ist der Metallverbinder 20 über eine zylindrische Verschraubung 22 und eine Verdrehsicherung in Form eines nachträglich eingebrachten Stiftes mit einer Gegenhülse 21 verbunden. Zwischen Gegenhülse 21 und Metallverbinder 20 ist das Ende des Rohres 11a eingeklemmt. Aufgrund der konischen Form lassen sich ausreichende Klemmkräfte erzeugen. Für eine gute Verbindung sind allerdings genaue konische Passungsflächen auf der Innen- und auf der Außenseite des Rohres nötig. Die innere Passungsfläche 23 wird über den Wickelkern bei der Herstellung erzeugt. Die äußere Passungsfläche 16a über das erfinderische Verfahren mit einem Passungsformwerkzeug wie oben beschrieben. Weitere mögliche Anwendungen für das Herstellverfahren ergeben sich bei anderen Rohrverbindungen oder bei Anbauteilen, die auf eine genaue Außenoberfläche des Rohres angewiesen sind.

### Bezugszeichenliste

- 1, 11,11a: CFK-Rohr
- 2, 12: Passungsformwerkzeug
- 3: Innendurchmesser des CFK-Rohres
- 4: Außendurchmesser für Passungsfläche
- 5, 15: äußere Oberfläche CFK-Rohr
- 6, 16, 16a: Passungsfläche
- 7, 17: Achse CFK-Rohr
- 8, 18: Wickelkern

- 13: Innenfläche des CFK-Rohres
- 14: Kegelfläche der Passungsfläche

- 20: Metallverbinder
- 21: Gegenhülse
- 22: zylindrische Verschraubung
- 23: Innenpassungsfläche des CFK-Rohres
- 24: konisches Gewinde
- 25: Verdrehsicherungsstift

- A: axiale Richtung der Aufschiebebewegung

## Patentansprüche

1. Verfahren zur Herstellung eines Rohres (1,11,11a) aus faserverstärktem Kunststoff mit einer Passungsfläche (6,16,16a) wobei die folgenden Schritte ausgeführt werden:
a) Wickeln eines Faserverstärkungsmaterials auf einen Wickelkern und Aufbringen eines Matrixmaterials zur Bildung des Rohres (1,11,11 a),
b) Zentrieren eines Passungsformwerkzeuges (2,12) in Bezug auf den Wickelkern,
c) Aufschieben des Passungsformwerkzeuges in axialer Richtung auf die spätere Passungsfläche (6,16,16a), welche auf einem Teil der Außenumfangsfläche des Rohres (1,11,11a) gebildet wird, wobei das Passungsformwerkzeug zumindest zeitweise während des Aufschiebens relativ zum Rohr (1,11,11a) und zum Wickelkern rotiert,
d) Thermische Behandlung des Rohres (1,11,11a) in einem Ofen zum Aushärten des Matrixmaterials, wobei das Passungsformwerkzeug (2,12) während der thermischen Behandlung in Kontakt mit dem Teil der Außenumfangsfläche bleibt und dadurch eine definierte Oberfläche (6,16,16a) auf der Rohraußenseite durch das Passungswerkzeug (2,12) erzeugt wird.

2. Verfahren nach Anspruch 1
**dadurch gekennzeichnet,**
**dass** die Schritte a) bis d) nacheinander in der angegebenen Reihenfolge ausgeführt werden.

3. Verfahren nach Anspruch 1 oder 2
**dadurch gekennzeichnet,**
**dass** das Passungsformwerkzeug (2,12) zweiteilig oder mehrteilig ausgeführt ist und dass diese Teile vor dem Aufschieben zusammenfügt werden.

4. Verfahren nach einem der vorherigen Ansprüche
**dadurch gekennzeichnet,**
**dass** das Passungsformwerkzeug (2,12) beheizt wird, bevor oder während es mit dem Rohr (1,11,11a) in Kontakt gebracht ist.

5. Verfahren nach einem der vorherigen Ansprüche
**dadurch gekennzeichnet,**
**dass** das Passungsformwerkzeug (2,12) vorher erwärmt worden ist, wenn es mit dem Rohr (1,11,11 a) in Kontakt gebracht wird.

6. Verfahren nach Anspruch 4 oder 5
**dadurch gekennzeichnet,**
**dass** am Passungsformwerkzeug (2,12) ein Temperatursensor und/oder zur Beheizung des Passungsformwerkzeuges (2,12) eine Temperaturregelung verwendet wird.

7. Verfahren nach einem der vorherigen Ansprüche
**dadurch gekennzeichnet,**
**dass** das Passungsformwerkzeug (2,12) eine zylindrische Oberfläche (6) mit konstantem Außendurchmesser (4) auf dem Rohr (1) erzeugt.

8. Verfahren nach einem der vorherigen Ansprüche
**dadurch gekennzeichnet,**
**dass** das Passungsformwerkzeug (2,12) eine konische Oberfläche (16,16a) auf dem Rohr (11,11 a) erzeugt.

9. Verfahren nach einem der vorherigen Ansprüche
**dadurch gekennzeichnet,**
**dass** das Passungsformwerkzeug (2,12) eine gewölbte Oberfläche mit definiertem Wölbungsradius auf dem Rohr (1,11,11a) erzeugt.

10. Verfahren nach einem der vorherigen Ansprüche
**dadurch gekennzeichnet,**
**dass** als Faserverstärkungsmaterial Kohlefasern oder Glasfasern oder Aramidfasern verwendet werden, die bevorzugt in Form von Rovings aufgewickelt werden.

11. Verfahren nach einem der vorherigen Ansprüche
**dadurch gekennzeichnet,**
**dass** das Matrixmaterial ein Duromer, insbesondere ein Epoxidharz ist.

12. Verfahren nach einem der vorherigen Ansprüche
**dadurch gekennzeichnet,**
**dass** das Passformwerkzeug (2,12) mit einem Druck, der größer als 0 bar ist und bis zu 1 bar beträgt, an die Außenumfangsfläche (6,16,16a) angepresst wird.

13. Rohr (1,11,11a) aus faserverstärktem Kunststoff mit einer ringförmigen Passungsfläche (6,16,16a) hergestellt in einem Verfahren entsprechend einem der vorherigen Ansprüche.

14. Rohr nach Anspruch 13
**dadurch gekennzeichnet,**
**dass** der Außendurchmesser des Rohres im Bereich der Passungsfläche (6,16,16a) zwischen 30 und 500 mm, bevorzugt zwischen 80 und 300 mm liegt und dass dieser Durchmesser im Bereich der ringförmigen Passungsfläche eine Abweichung vom Sollwert von kleiner +/- 0,5 mm, bevorzugt von kleiner +/-0,1 mm aufweist.

15. Rohr nach Anspruch 13 oder 14
**dadurch gekennzeichnet,**
**dass** die Passungsfläche (16,16a) konisch ausgebildet ist, dass deren Konuswinkel zwischen 0,1° und 5°, bevorzugt zwischen 0,1 und 1° beträgt und dass die Abweichung vom Sollwert des Konuswinkels kleiner als +/- 0,2° bevorzugt kleiner als +/-0,05° ist.

## Claims

1. Process for producing a tube (1,11,11a) made of fiber-reinforced plastic having a fitting face (6,16,16a), in which the following steps are carried out:
a) winding a fiber reinforcing material onto a winding core and applying a matrix material to form the tube (1,11,11a),
b) centering a fitting shaping tool (2,12) in relation to the winding core,
c) pushing the fitting shaping tool in the axial direction onto the later fitting face (6,16,16a), which is formed on an annular part of the external circumferential face of the tube (1,11,11a), wherein the fitting shaping tool rotates relative to the tube (1,11,11a) and to the winding core at least temporarily as it is being pushed on,
d) thermally treating the tube (1,11,11a) in a furnace to cure the matrix material, wherein the fitting shaping tool (2,12) remains in contact with the part of the external circumferential face during the thermal treatment and as a result a defined surface (6,16,16a) is generated on the outer side of the tube by the fitting shaping tool (2,12).

2. Process according to Claim 1,
**characterized in that**
steps a) to d) are carried out one after the other in the indicated sequence.

3. Process according to Claim 1 or 2,
**characterized in that**
the fitting shaping tool (2,12) is of two-part or multi-part configuration, and **in that** these parts are joined together prior to pushing on.

4. Process according to one of the preceding claims,
**characterized in that**
the fitting shaping tool (2,12) is heated before or while it is brought into contact with the tube (1,11,11a).

5. Process according to one of the preceding claims,
**characterized in that**
the fitting shaping tool (2,12) has been heated previously if it is brought into contact with the tube (1, 11, 11a) .

6. Process according to Claim 4 or 5,
**characterized in that**
a temperature sensor is used on the fitting shaping tool (2,12) and/or a temperature controller is used for heating the fitting shaping tool (2,12).

7. Process according to one of the preceding claims,
**characterized in that**
the fitting shaping tool (2,12) generates a cylindrical surface (6) having a constant external diameter (4) on the tube (1).

8. Process according to one of the preceding claims,
**characterized in that**
the fitting shaping tool (2,12) generates a conical surface (16, 16a) on the tube (11,11a).

9. Process according to one of the preceding claims,
**characterized in that**
the fitting shaping tool (2,12) generates a curved surface with a defined radius of curvature on the tube (1,11,11a).

10. Process according to one of the preceding claims,
**characterized in that**
carbon fibers or glass fibers or aramide fibers, which are wrapped preferably in the form of rovings, are used as a fiber reinforcement material.

11. Process according to one of the preceding claims,
**characterized in that**
the matrix material is a thermosetting plastic, and in particular an epoxy resin.

12. Process according to one of the preceding claims,
**characterized in that**
the fitting shaping tool (2,12) is pressed against the external circumferential face (6,16,16a) with a pressure that is greater than 0 bar and is up to 1 bar.

13. Tube (1,11,11a) made of fiber-reinforced plastic having an annular fitting face (6,16,16a) produced in a process according to one of the preceding claims.

14. Tube according to Claim 13,
**characterized in that**
the external diameter of the tube in the region of the fitting face (6,16,16a) lies between 30 and 500 mm, and preferably between 80 and 300 mm, and **in that** this diameter exhibits a deviation from the nominal value of less than +/- 0.5 mm, and preferably of less than +/-0.1 mm, in the region of the annular fitting face.

15. Tube according to Claim 13 or 14,
**characterized in that**
the fitting face (16,16a) is conically shaped, **in that** its cone angle is between 0.1° and 5°, and preferably between 0.1° and 1°, and **in that** the deviation from the nominal value of the cone angle is less than +/- 0.2°, and preferably less than +/- 0.05°.

## Revendications

1. Procédé de fabrication d'un tube (1, 11, 11a) en matière synthétique renforcée de fibres et présentant une surface d'adaptation (6, 16, 16a), les étapes suivantes étant réalisées :
a) enroulement d'un matériau fibreux de renfort sur une âme d'enroulement et application d'un matériau de matrice en vue de former le tube (1, 11, 11a),
b) centrage d'un outil (2, 12) de façonnage d'adaptation par rapport à l'âme d'enroulement,
c) déplacement de l'outil de façonnage d'adaptation dans la direction axiale au-dessus de la future surface d'adaptation (6, 16a, 16b) formée sur une partie de la surface périphérique extérieure du tube (1, 11, 11a), l'outil de façonnage d'adaptation tournant par rapport au tube (1, 11, 11a) et par rapport à l'âme d'enroulement au moins pendant le déplacement,
d) traitement thermique du tube (1, 11, 11a) dans un four pour durcir le matériau de matrice, l'outil (2, 12) de façonnage d'adaptation restant en contact avec la partie de la surface périphérique extérieure pendant le traitement thermique de telle sorte que l'outil d'adaptation (2, 12) forme une surface (6, 16, 16a) définie sur le côté extérieur du tube.

2. Procédé selon la revendication 1, **caractérisé en ce que** les étapes a) à d) sont réalisées successivement dans la succession indiquée.

3. Procédé selon les revendications 1 ou 2, **caractérisé en ce que** l'outil de façonnage d'adaptation (2, 12) est réalisé en deux ou plusieurs pièces et **en ce que** ces pièces sont assemblées avant le déplacement.

4. Procédé selon l'une des revendications précédentes, **caractérisé en ce que** l'outil (2, 12) de façonnage d'adaptation est chauffé avant ou pendant qu'il est mis en contact avec le tube (1, 11, 11a).

5. Procédé selon l'une des revendications précédentes, **caractérisé en ce que** l'outil (2, 12) de façonnage d'adaptation est chauffé préalablement avant d'être mis en contact avec le tube (1, 11, 11a).

6. Procédé selon les revendications 4 ou 5, **caractérisé en ce qu'**un capteur de température est utilisé sur l'outil (2, 12) de façonnage d'adaptation et/ou une régulation de température est utilisée pour chauffer l'outil (2, 12) de façonnage d'adaptation.

7. Procédé selon l'une des revendications précédentes, **caractérisé en ce que** l'outil (2, 12) de façonnage d'adaptation forme une surface cylindrique (6) de diamètre extérieur constant (4) sur le tube (1).

8. Procédé selon l'une des revendications précédentes, **caractérisé en ce que** l'outil (2, 12) de façonnage d'adaptation forme une surface conique (16, 16a) sur le tube (11, 11a).

9. Procédé selon l'une des revendications précédentes, **caractérisé en ce que** l'outil (2, 12) de façonnage d'adaptation forme une surface bombée à un rayon de bombement défini sur le tube (1, 11, 11a).

10. Procédé selon l'une des revendications précédentes, **caractérisé en ce que** comme matériau fibreux de renfort, il utilise des fibres de carbone, des fibres de verre ou des fibres d'aramide qui sont enroulées de préférence sous la forme de mèches.

11. Procédé selon l'une des revendications précédentes, **caractérisé en ce que** le matériau de matrice est un matériau thermodurcissable et en particulier une résine époxy.

12. Procédé selon l'une des revendications précédentes, **caractérisé en ce que** l'outil (2, 12) de façonnage d'adaptation est repoussé contre la surface périphérique extérieure (6, 16, 16a) sous une pression supérieure à 0 bar et pouvant atteindre 1 bar.

13. Tube (1, 11, 11a) en matière synthétique renforcée de fibres, présentant une surface annulaire d'adaptation (6, 16, 16a) et réalisé dans un procédé selon l'une des revendications précédentes.

14. Tube selon la revendication 13, **caractérisé en ce que** le diamètre extérieur du tube au niveau de la surface d'adaptation (6, 16, 16a) est compris entre 30 et 500 mm et de préférence entre 80 et 300 mm et **en ce que** ce diamètre présente au niveau de la surface annulaire d'adaptation un écart par rapport à l'angle de consigne inférieur à +/- 0,5 mm et de préférence inférieur à +/- 0,1 mm.

15. Tube selon les revendications 13 ou 14, **caractérisé en ce que** la surface d'adaptation (16, 16a) a une forme conique, **en ce que** son angle de cône est compris entre 0,1° et 5° et de préférence entre 0,1 et 1°, et **en ce que** l'écart par rapport à la valeur de consigne de l'angle de cône est inférieur à +/- 0,2° et de préférence inférieur à +/- 0,05°.
